# EUROPEAN PATENT APPLICATION

(11) **EP 3 537 047 A1**
(43) Date of publication of application: **11.09.2019**
(21) Application number: 19160981.7
(22) Date of filing: 06.03.2019
(51) Int. Cl.: F23R 3/00

(54) **SLOT ARRANGEMENTS FOR AN IMPINGEMENT FLOATWALL FILM COOLING OF A TURBINE ENGINE**

(30) Priority: 07.03.2018 US 201815914815
(71) Applicant: United Technologies Corporation, Farmington, CT 06032 (US)
(72) Inventor: XU, JinQuan, East Greenwich, RI Rhode Island 02818 (US)
(74) Representative: Dehns

(57) **Abstract**

A combustion liner (300) for an engine (20) includes a shell (302) having an impingement slot (308) disposed therethrough and a panel (304) having an effusion cooling hole disposed therethrough, the effusion cooling hole offset from the impingement slot (308) and configured to create an impingement floatwall film formed between the panel (304) and a combustion chamber of the engine (20). A length of the impingement slot (308) is longer than a width of the impingement slot (308), the length and width configured to create turbulent airflow within a flow channel (306) and minimize particulate matter accumulation. In various embodiments, the length of the impingement slot (308) is at least approximately five or ten times longer than the width.

## Description

### FIELD

This disclosure relates to cooling arrangements for various components of a turbine engine, such as a gas turbine engine, and more particularly to impingement slot arrangements formed within a shell.

### BACKGROUND

Turbine engines, and particularly combustion and gas turbine engines, are rotary engines that extract energy from a flow of combusted gases passing through a series of compressor stages, a combustor, and a plurality of turbine blades.

In order to enhance engine efficiency, most gas turbine engines for aircraft operate at high temperatures. As a result, cooling arrangements are configured in order to decrease the temperature of the various components of the engine, including ducting cooler air from compressors to engine components that require cooling. While compressor air is still hot (e.g., approximately 932-1,292 degrees Fahrenheit (500-700 degrees Celsius)), it is usually cooler than combustion gases and/or turbine air (e.g., approximately 1,832-3,632 degrees Fahrenheit (1,000-2,000 degrees Celsius)), and it can thus be used for cooling.

Since combustion liners are exposed to high temperatures, some utilize an impingement floatwall film to facilitate cooling, in which cooling air impinges on a surface of an engine component to create a film of cooling air along the surface that is exposed to the high temperature gas flows. This thin film of air is produced by venting cooling air through a plurality of passages that perforate various walls of the engine component. Air that exits the passages is directed, by the passages, to flow into a boundary layer along a surface of the component. This film-cooled floatwall cools the external walls of the engine component and provides a protective film of cooling air between the high temperature gas flows and the surface of the engine component. However, this cooling air may also contain particulate matters of micron sizes.

### SUMMARY

In various embodiments, a combustion liner for an engine includes at least the following: a shell having an impingement slot disposed therethrough; and a panel spaced apart from the shell to define a flow channel therebetween, the panel having an effusion cooling hole disposed therethrough, the effusion cooling hole offset from the impingement slot and configured to create an impingement floatwall film formed between the panel and a combustion chamber of the engine; wherein a length of the impingement slot on a first surface of the shell is longer than a width of the impingement slot on the first surface of the shell, the first surface being distal the flow channel, the length and width configured to create turbulent airflow within the flow channel.

In various embodiments: the length of the impingement slot is at least approximately five times longer than the width of the impingement slot; the length of the impingement slot is at least approximately ten times longer than the width of the impingement slot; a sidewall of the impingement slot forms a first angle with a second surface of the shell, the second surface being proximate the flow channel and spaced apart from the first surface, and a sidewall of the effusion cooling hole forms a second angle with a surface of the panel proximate the combustion chamber that is approximately equal to the first angle; a sidewall of the impingement slot forms a first angle with a second surface of the shell, the second surface being proximate the flow channel and spaced apart from the first surface, and a sidewall of the effusion cooling hole forms a second angle with a surface of the panel proximate the combustion chamber that is greater than the first angle; a sidewall of the impingement slot forms a first angle with a second surface of the shell, the second surface being proximate the flow channel and spaced apart from the first surface, and a sidewall of the effusion cooling hole forms a second angle with a surface of the panel proximate the combustion chamber that is less than the first angle; at least a portion of a sidewall of the impingement slot is at least one of beveled or chamfered along the first surface of the shell; at least a portion of a sidewall of the impingement slot diverges from the first surface of the shell towards a second surface of the shell, the second surface being proximate the flow channel and spaced apart from the first surface; a shape of the impingement slot on the first surface includes at least one rounded corner; a shape of the impingement slot on the first surface is at least one of chevron-shaped or curvilinear; and/or the width of the impingement slot on the first surface varies along the first surface.

In various embodiments, a gas turbine engine includes at least the following: a compressor section configured to compress air; a combustor fluidly coupled to the compressor section and including a combustion liner forming a combustion chamber in which the compressed air is mixed with fuel and combusted to generate combustion gases; and a turbine section fluidly coupled to the combustor to receive the combustion gases from the combustor and extract energy from the combustion gases; wherein the combustion liner includes at least the following: a shell having an impingement slot disposed therethrough; and a panel spaced apart from the shell to define a flow channel therebetween, the panel having an effusion cooling hole disposed therethrough, the effusion cooling hole offset from the impingement slot and configured to create an impingement floatwall film formed between the panel and a combustion chamber of the gas turbine engine; wherein a length of the impingement slot on a first surface of the shell is longer than a width of the impingement slot on the first surface of the shell, the first surface being distal the flow channel, the length and width configured to create turbulent airflow within the flow channel.

In various embodiments: the length of the impingement slot is at least approximately five times longer than the width of the impingement slot; the length of the impingement slot is at least approximately ten times longer than the width of the impingement slot; a sidewall of the impingement slot forms a first angle with a second surface of the shell, the second surface being proximate the flow channel and spaced apart from the first surface, and a sidewall of the effusion cooling hole forms a second angle with a surface of the panel proximate the combustion chamber that is approximately equal to the first angle; a sidewall of the impingement slot forms a first angle with a second surface of the shell, the second surface being proximate the flow channel and spaced apart from the first surface, and a sidewall of the effusion cooling hole forms a second angle with a surface of the panel proximate the combustion chamber that is greater than the first angle; a sidewall of the impingement slot forms a first angle with a second surface of the shell, the second surface being proximate the flow channel and spaced apart from the first surface, and a sidewall of the effusion cooling hole forms a second angle with a surface of the panel proximate the combustion chamber that is less than the first angle; at least a portion of a sidewall of the impingement slot is at least one of beveled or chamfered along the first surface of the shell; at least a portion of a sidewall of the impingement slot diverges from the first surface of the shell towards a second surface of the shell, the second surface being proximate the flow channel and spaced apart from the first surface; a shape of the impingement slot on the first surface includes at least one rounded corner; a shape of the impingement slot on the first surface is at least one of chevron-shaped or curvilinear; and/or the width of the impingement slot on the first surface varies along the first surface.

### BRIEF DESCRIPTION OF THE DRAWINGS

The accompanying drawings illustrate various embodiments employing the principles described herein and are a part of the specification. The illustrated embodiments are meant for description only, and they do not limit the scope of the claims, and in which:
FIG. 1 is a simplified cross-sectional side view of an exemplary gas turbine engine, in various embodiments;
FIG. 2 is a partial cross-sectional side view of a combustor of the exemplary gas turbine engine of FIG. 1, in various embodiments;
FIG. 3 is a partial perspective view of a shell associated with the exemplary gas turbine engine of FIG. 1, in various embodiments;
FIG. 4 is a partial cross-sectional side view of the shell of FIG. 3 and a panel associated with the exemplary gas turbine engine of FIG. 1, in various embodiments;
FIG. 5 is a partial perspective view of a shell associated with the exemplary gas turbine engine of FIG. 1, in various embodiments;
FIG. 6 is a partial cross-sectional side view of the shell of FIG. 5 and a panel associated with the exemplary gas turbine engine of FIG. 1, with impingement slots disposed at a same angle as effusion cooling holes relative to bottom (i.e., second) surfaces of the shell and panel, respectively, in various embodiments;
FIG. 7 is a partial cross-sectional side view of a shell and panel associated with the exemplary gas turbine engine of FIG. 1, with impingement slots disposed at a lesser angle than effusion cooling holes relative to bottom (i.e., second) surfaces of the shell and panel, respectively, in various embodiments;
FIG. 8 is a partial cross-sectional side view of a shell and panel associated with the exemplary gas turbine engine of FIG. 1, with impingement slots disposed at a greater angle than effusion cooling holes relative to bottom (i.e., second) surfaces of the shell and panel, respectively, in various embodiments;
FIG. 9 is a partial cross-sectional side view of a shell and panel associated with the exemplary gas turbine engine of FIG. 1, with impingement slots having at least one beveled or chamfered sidewall along a top (i.e., first) surface of the shell, in various embodiments;
FIG. 10 is a partial cross-sectional side view of a shell and panel associated with the exemplary gas turbine engine of FIG. 1, with impingement slots having multiple beveled or chamfered sidewalls along a top (i.e., first) surface of the shell, in various embodiments;
FIG. 11 is a partial cross-sectional side view of a shell and panel associated with the exemplary gas turbine engine of FIG. 1, with impingement slots having divergent sidewalls towards a bottom (i.e., second) surface of the shell, in various embodiments;
FIG. 12 is a partial cross-sectional side view of a shell and panel associated with the exemplary gas turbine engine of FIG. 1, with impingement slots disposed at an angle less than approximately 90 degrees relative to a bottom (i.e., second) surface of the shell and effusion cooling holes disposed at an angle greater than approximately 90 degrees relative to a bottom (i.e., second) surface of the panel, in various embodiments; and
FIG. 13 is a partial top view of a shell associated with the exemplary gas turbine engine of FIG. 1, with various impingement slots having various shapes, in various embodiments.

### DETAILED DESCRIPTION

This detailed description of exemplary embodiments references the accompanying drawings, which show exemplary embodiments by way of illustration. While these exemplary embodiments are described in sufficient detail to enable those skilled in the art to practice this disclosure, it should be understood that other embodiments may be realized and that logical changes and adaptations in design and construction may be made in accordance with this disclosure and the teachings herein described without departing from the scope of this disclosure. Thus, this detailed description is presented for purposes of illustration only and not of limitation.

In accordance with various aspects of this disclosure, apparatuses, systems, and methods are described for cooling a panel of a combustion liner of an engine.

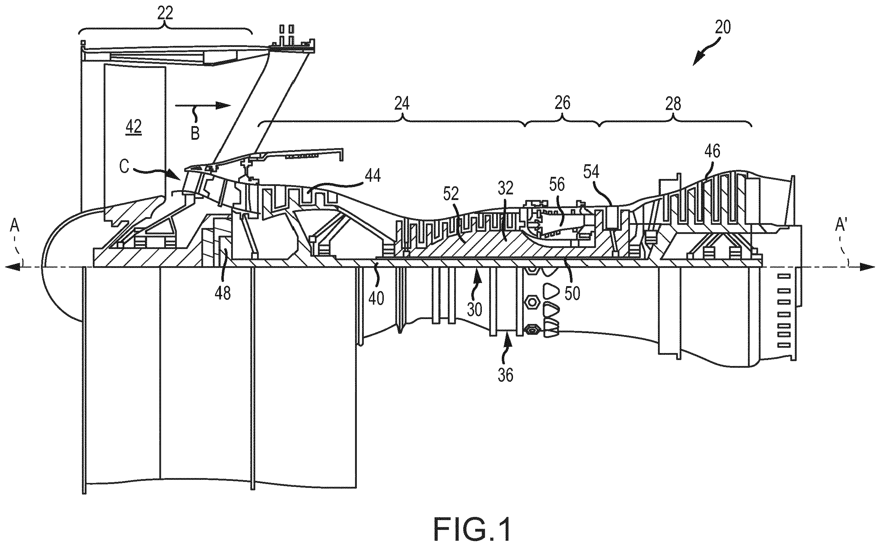

Referring now particularly to FIG. 1, a representative gas turbine engine 20 is a two-spool turbofan that incorporates a fan section 22, a compressor section 24, a combustor section 26, and a turbine section 28. In various embodiments, the gas turbine engine 20 includes other systems and features too.

In various embodiments, the fan section 22 is positioned towards a front or inlet of the gas turbine engine 20, and it includes a fan 42 that induces air from a surrounding environment into the gas turbine engine 20 and accelerates a portion of the air towards the compressor section 24.

In various embodiments, the fan section 22 drives the air along a bypass flowpath B while the compressor section 24 drives the air along a core flowpath C for acceleration, compression, and communication into the combustor section 26, then expansion through the turbine section 28.

In various embodiments, the compressor section 24 raises the pressure of the air received from the fan section 22 to a relatively high level. The compressed air from the compressor section 24 then enters the combustor section 26, where one or more fuel nozzles inject fuel into the compressed air. The fuel-air mixture is ignited in the combustor section 26 to generate combustion gases. The high-energy combustion gases from the combustor section 26 then flow into and through the turbine section 28, thereby causing rotationally mounted turbine blades to rotate and generate energy. The air exiting the turbine section 28 is exhausted from the gas turbine engine 20 via an exhaust section.

In various embodiments, the gas turbine engine 20 includes one or more of a low pressure compressor ("LPC") 44, a high pressure compressor ("HPC") 52, a high pressure turbine ("HPT") 54, and/or a low pressure turbine ("LPT") 46.

In various embodiments, the gas turbine engine 20 is or includes other types of engines, such as turbojets, turboshafts, three-spool (plus fan) turbofans, and/or direct drive turbofans. In various embodiments, an intermediate spool includes an intermediate pressure compressor (not shown) between the LPC 44 and the HPC 52 and/or an intermediate pressure turbine (not shown) between the HPT 54 and the LPT 46.

In various embodiments, the gas turbine engine 20 includes a low spool 30 and a high spool 32 mounted for rotation about an engine central longitudinal axis A - A' relative to an engine static structure or engine case 36 via multiple bearing structures. In various embodiments, the low spool 30 includes an inner shaft 40 that interconnects the fan 42 of the fan section 22, the LPC 44 of the compressor section 24, and the LPT 46 of the turbine section 28. In various embodiments, the inner shaft 40 communicates with the fan 42 directly or through a geared architecture 48 to drive the low spool 30 at a higher speed that the fan 42. In various embodiments, a reduction transmission is an epicyclic transmission, such as a planetary or star gear system.

In various embodiments, the high spool 32 includes an outer shaft 50 that interconnects the HPC 52 of the compressor section 24 and the HPT 54 of the turbine section 28. In various embodiments, a combustor 56 is arranged between the HPC 52 and the HPT 54. In various embodiments, the inner shaft 40 and the outer shaft 50 are concentric and rotate about the engine central longitudinal axis A - A' that is collinear with their longitudinal axes. Core airflow flowing along core flowpath C is compressed by the LPC 44, further compressed by the HPC 52, mixed with fuel, burned in the combustor 56, and then expanded over the HPT 54 and the LPT 46. In various embodiments, the HPT 54 and the LPT 46 rotationally communicate with the high spool 32 and the low spool 30, respectively, in response to the expansion.

In various embodiments, the gas turbine engine 20 is a high-bypass geared aircraft engine. In various embodiments, the gas turbine engine 20 bypass ratio is greater than approximately 6:1. In various embodiments, the geared architecture 48 includes an epicyclic gear train, such as a planetary gear system or other gear system. In various embodiments, the example epicyclic gear train has a gear reduction ratio of greater than approximately 2.3:1, and, in other embodiments, it is greater than approximately 2.5:1. In various embodiments, the geared turbofan enables operation of the low spool 30 at higher speeds that can increase the operational efficiency of the LPC 44 and the LPT 46 and render increased pressure in a fewer number of stages.

A pressure ratio associated with the LPT 46 is pressure measured prior to the inlet of the LPT 46 as related to the pressure at the outlet of the LPT 46 prior to an exhaust nozzle of the gas turbine engine 20. In various embodiments, the bypass ratio of the gas turbine engine 20 is greater than approximately 10:1, the fan 42 diameter is significantly larger than that of the LPC 44, and the LPT 46 has a pressure ratio that is greater than approximately 5:1.

In various embodiments, a significant amount of thrust is provided by the bypass flowpath B due to the high bypass ratio. In various embodiments, the fan section 22 is suited for a particular flight condition-e.g., cruising at approximately 0.8 Mach and/or approximately 35,000 feet (10,668 meters). This flight condition, with the gas turbine engine 20 at a preferred fuel consumption, is known as thrust specific fuel consumption ("TSFC"), which is an industry-standard parameter of fuel consumption per unit of thrust.

Fan pressure ratio is a pressure ratio across a blade of the fan 42 in the fan section 22 without using a fan exit guide vane system. In various embodiments, a low fan pressure ratio of the gas turbine engine 20 is less than 1.45. A low corrected fan tip speed is the actual fan tip speed divided by an industry-standard temperature correction of (T/518.7)0.5, in which T is an ambient temperature measurement in degrees Rankine. In various embodiments, the low corrected fan tip speed of the gas turbine engine 20 is less than approximately 1,150 feet (351 meters) per second.

Referring now particularly to FIGS. 1-2, the combustor section 26, in various embodiments, includes the combustor 56 having a multi-layered outer wall 60, a multi-layered inner wall 62, and a diffuser case module 64 that encases the outer wall 60 and the inner wall 62. In various embodiments, the outer wall 60 and the inner wall 62 are radially spaced apart from one another such that an annular combustion chamber 66 is defined therebetween. In various embodiments, the outer wall 60 is spaced radially inward from an outer diffuser case 68 of the diffuser case module 64 to define an outer annular plenum 70, and the inner wall 62 is spaced radially outward from an inner diffuser case 72 of the diffuser case module 64 to define an inner annular plenum 74. In various embodiments, the outer wall 60 and the inner wall 62 each have a shell spaced apart from a panel, as elaborated upon herein.

In various embodiments, the combustion chamber 66 contains the combustion products that flow axially toward the turbine section 28. In various embodiments, the outer wall 60 and/or the inner wall 62 are generally cylindrical and extend circumferentially about the engine central longitudinal axis A - A'. In various embodiments, one or more of the outer wall 60 and/or the inner wall 62 are formed utilizing shells and panels. In various embodiments, the shells and/or panels are circumferentially continuous (e.g., ring shaped) and divided axially, divided circumferentially from each, and/or both (e.g., substantially rectilinear in shape).

In various embodiments, the combustor 56 includes a forward assembly 76 immediately downstream of the compressor section 24 to receive compressed airflow therefrom. In various embodiments, the forward assembly 76 includes an annular hood 78, a bulkhead assembly 80, and a plurality of swirlers 82 (one shown). In various embodiments, each of the swirlers 82 is circumferentially aligned with one of a plurality of fuel nozzles 84 (one shown) and a respective one of a plurality of hood ports 86. The bulkhead assembly 80 includes a bulkhead support shell 88 secured to the outer wall 60 and to the inner wall 62, and a plurality of circumferentially distributed bulkhead heat shields or panels 90 secured to the bulkhead support shell 88 around each of a respective swirler opening 92. In various embodiments, the bulkhead support shell 88 is generally annular and the plurality of circumferentially distributed bulkhead panels 90 are segmented, typically one to each fuel nozzle 84 and swirler 82. In various embodiments, the panels 90 and bulkhead support shells 88 are replaced with a multi-layered, single wall, similar to the outer wall 60 and the inner wall 62.

In various embodiments, the annular hood 78 extends radially between, and is secured to, the forwardmost ends of the outer wall 60 and the inner wall 62. Each one of the plurality of circumferentially distributed hood ports 86 receives a respective one of the plurality of fuel nozzles 84 and facilitates the direction of the compressed air into the forward end of the combustion chamber 66 through the swirler opening 92. In various embodiments, each fuel nozzle 84 is secured to the diffuser case module 64 and projects through one of the hood ports 86 into the respective swirler opening 92.

In various embodiments, the forward assembly 76 introduces core combustion air into the forward section of the combustion chamber 66 while the remainder enters the outer annular plenum 70 and/or the inner annular plenum 74. The plurality of fuel nozzles 84 and adjacent structure generate a blended fuel-air mixture that supports stable combustion in the combustion chamber 66.

In various embodiments, opposite the forward assembly 76, the outer wall 60 and the inner wall 62 are mounted adjacent to a first row of nozzle guide vanes ("NGVs") 94 in the HPT 54. The NGVs 94 are static engine components that direct core airflow combustion gases onto the turbine blades of the first turbine rotor in the turbine section 28 to facilitate converting pressure energy into kinetic energy. In various embodiments, the core airflow combustion gases are also accelerated by the NGVs 94 because of their convergent shape and, in various embodiments, are given a "spin" or "swirl" in the direction of turbine rotor rotation. In various embodiments, the turbine rotor blades absorb this energy to drive the turbine rotor at high speed.

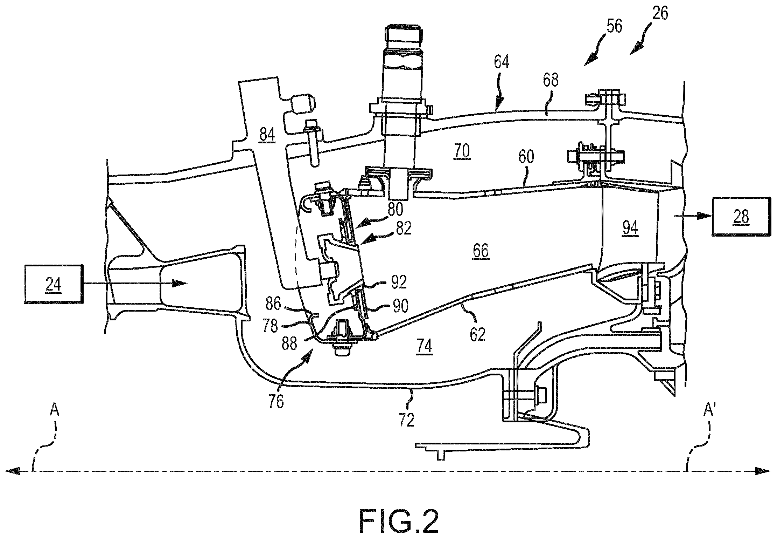

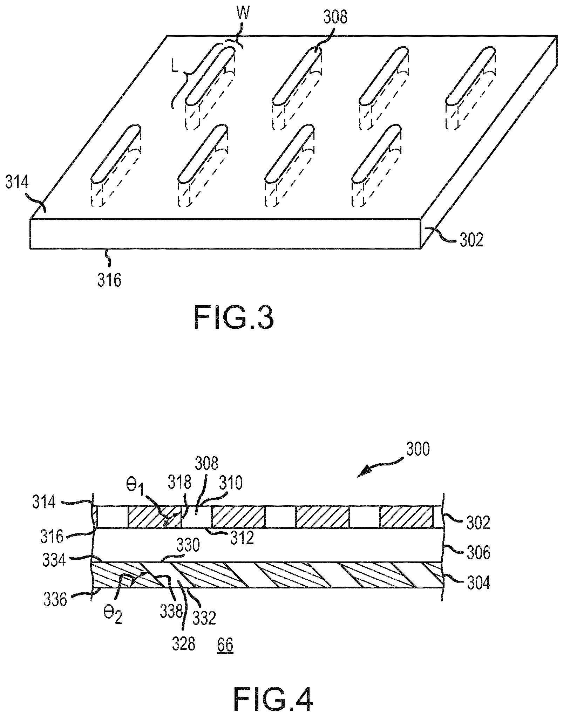

Referring now particularly to FIGS. 3-4, a combustion liner 300 (comprising, for example, the outer wall 60 and/or the inner wall 62 of FIG. 2) associated with the gas turbine engine 20 of FIG. 1 is shown. In various embodiments, the combustion liner 300 encapsulates, at least partially, the combustion chamber 66 of the gas turbine engine 20 and includes a shell 302 and a panel 304 spaced apart from one another to form a gap therebetween, the gap creating a flow channel 306 between the shell 302 and the panel 304.

In various embodiments, the panel 304 is in closer proximity to the combustion chamber 66 than the shell 302, such that the panel 304 is hotter than the shell 302 when the gas turbine engine 20 is operating. In various embodiments, aspects of this disclosure cool the combustion liner 300, and, in particular, the panel 304.

In various embodiments, the shell 302 includes one or more impingement slots 308 that are elongated apertures extending through the shell 302 for providing a cooling fluid (e.g., cooling air) to impinge upon the panel 304. More specifically, the impingement slots 308 in the shell 302 extend from an inlet 310 in a top (i.e., first) surface 314 of the shell 302 to an outlet 312 in a bottom (i.e., second) surface 316 of the shell 302 to allow the cooling fluid to pass through the shell 302 and into the flow channel 306. In various embodiments, at least one or more sidewalls 318 of the impingement slots 308 extend from the inlet 310 in the top (i.e., first) surface 314 of the shell 302 to the outlet 312 in the bottom (i.e., second) surface 316 of the shell 302.

In various embodiments, the impingement slots 308 are manufactured in the shell 302 using casting, electrical discharge machining and/or drilling, electromechanical machining and/or drilling, laser cutting, percussion, water jet cutting, various combinations thereof, and/or other suitable methods.

In various embodiments, the inlet 310 in the top surface 314 of the shell 302 has a same dimensional area as the outlet 312 in the bottom surface 316 of the shell 302 (e.g., at least one or more of the sidewalls 318 of the impingement slot 308 are equidistant apart from one another within the shell 302 so that the impingement slots 308 maintain a generally constant area from the inlet 310 to the outlet 312 of the shell 302).

In various embodiments, the inlet 310 in the top surface 314 of the shell 302 has a larger dimensional area than the outlet 312 in the bottom surface 316 of the shell 302 (e.g., at least one or more of the sidewalls 318 of the impingement slot 308 converge and/or start to converge within the shell 302 towards the bottom surface 316 of the shell 302 so that the impingement slots 308 maintain a generally decreasing area from the inlet 310 to the outlet 312 of the shell 302).

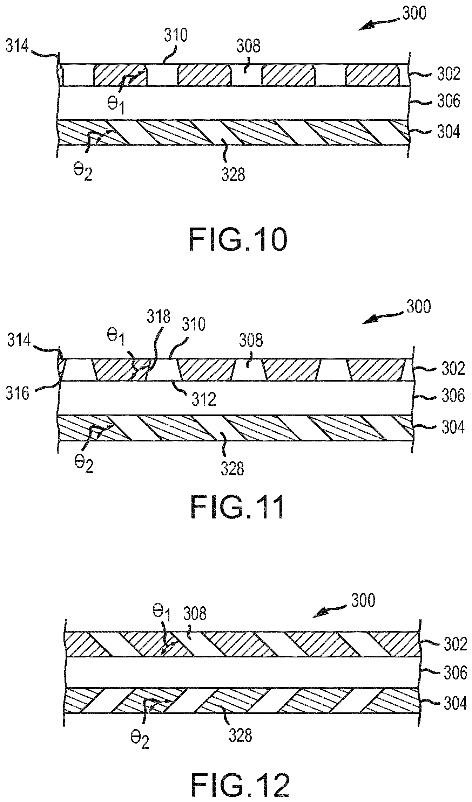

In various embodiments (e.g., see FIG. 11), the inlet 310 in the top surface 314 of the shell 302 has a smaller dimensional area than the outlet 312 in the bottom surface 316 of the shell 302 (e.g., at least one or more of the sidewalls 318 of the impingement slot 308 diverge and/or start to diverge within the shell 302 towards the bottom surface 316 of the shell 302 so that the impingement slots 308 maintain a generally increasing area from the inlet 310 to the outlet 312 of the shell 302).

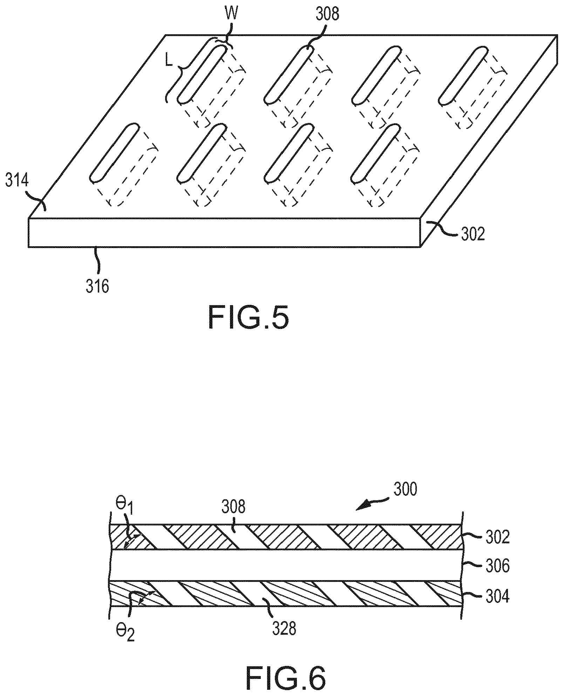

In various embodiments, at least one of the sidewalls 318 of the impingement slots 308 forms a first angle θ1 with the bottom (i.e., second) surface 316 of the shell 302. In FIGS. 3-4, for example, the first angle θ1 is approximately 90 degrees, plus or minus approximately 5 degrees. With momentary reference to FIGS. 5-6, for example, the first angle θ1 is approximately 45 degrees, plus or minus approximately 5 degrees. In various embodiments, the first angle θ1 is approximately 30-75 degrees, approximately 30-60 degrees, and/or approximately 20-70 degrees, each plus or minus approximately 5 degrees.

In various embodiments, the first angle θ1 is chosen to minimize particulate matter accumulation within the various components of the combustion liner 300. In various embodiments, the first angle θ1 is chosen to promote and/or maximize airflow instability through the impingement slot 308. In various embodiments, the first angle θ1 is chosen to partially or fully align with the direction of airflow passing proximate (e.g., above) and/or through the impingement slot 308. In various embodiments, the first angle θ1 is chosen to promote cross-flow within the flow channel 306 as the cooling air enters and/or exits from the effusion cooling holes 328 to form the impingement floatwall film.

In various embodiments, the combustion liner 300 of the gas turbine engine 20 also includes the panel 304 spaced apart from the shell 302 to form the flow channel 306 therebetween. More specifically, and in various embodiments, the panel 304 includes one or more effusion cooling holes 328 that are shaped apertures that extend through the panel 304 for removing heat from the panel 304 via the cooling fluid (e.g., cooling air) and forming the impingement floatwall film to facilitate cooling of the combustion chamber 66.

More specifically, and in various embodiments, the effusion cooling holes 328 in the panel 304 extend from an inlet 330 in a top (i.e., first) surface 334 of the panel 304 to an outlet 332 in a bottom (i.e., second) surface 336 of the panel 304 to allow the cooling fluid to pass through the panel 304 and form the floatwall film along a portion of the bottom (i.e., second) surface 336 that is disposed proximate the combustion chamber 66 of the gas turbine engine 20. In various embodiments, at least one or more sidewalls 338 of the effusion cooling holes 328 extend from the inlet 330 in the top (i.e., first) surface 334 of the panel 304 to the outlet 332 in the bottom (i.e., second) surface 336 of the panel 304.

In various embodiments, the inlet 330 in the top surface 334 of the panel 304 has a same dimensional area as the outlet 332 in the bottom surface 336 of the panel 304 (e.g., at least one of more of the sidewalls 338 of the effusion cooling holes 328 are equidistant apart from one another within the panel 304 so that the effusion cooling holes 328 maintain a generally constant area from the inlet 330 to the outlet 332 of the panel 304).

In various embodiments, at least one of the sidewalls 338 of the effusion cooling holes 328 forms a second angle θ2 with the bottom (i.e., second) surface 336 of the panel 304. In FIGS. 4 and 6-11, for example, the second angle θ2 is approximately 45 degrees, plus or minus approximately 5 degrees.

In various embodiments, the first angle θ1 is approximately the same as the second angle θ2, such as plus or minus 10 degrees of one another in various embodiments.

In various embodiments, the impingement slots 308 are offset from the effusion cooling holes 328 relative to one another across the flow channel 306, thereby creating cross-flow of the cooling fluid within the flow channel 306 and optimizing the floatwall film along the portion of the bottom (i.e., second) surface 336 of the panel 304 that is disposed proximate the combustion chamber 66 of the gas turbine engine 20. More specifically, cooling air exiting the outlet 312 in the bottom (i.e., second) surface 316 of the shell 302 is not directly aligned with the inlet 330 in the top (i.e., first) surface 334 of the panel 304, in various embodiments. Rather, in various embodiments, the cooling air exiting the outlet 312 in the bottom (i.e., second) surface 316 of the shell 302 is aligned with solid and/or non-penetrating portions of the top (i.e., first) surface 334 of the panel 304 so as to create a cross-flow of the cooling fluid within the flow channel 306, including as opposed to passing directly from the impingement slots 308 and through the flow channel 306 and into the cooling effusion holes 328, in various embodiments.

Referring now particularly to FIGS. 3 and 5, particular dimensions of the impingement slot 308 are chosen to promote a turbulent and/or unstable airflow within the flow channel 306 and to reduce particulate matter accumulation on and/or along the top surface 334 of the panel 304.

In various embodiments, the dimensions of at least one of the impingement slots 308 along the top (i.e., first) surface 314 of the shell 302 include a length L of the impingement slot 308 that is longer than a width W of the impingement slot 308.

In various embodiments, the length L of the impingement slot 308 is at least five times longer than the width W of the impingement slot 308-i.e., a length L to width W ratio of the impingement slot 308 is at least greater than approximately 5:1.

In various embodiments, the length L of the impingement slot 308 is at least ten times longer than the width W of the impingement slot 308-i.e., a length L to width W ratio of the impingement slot 308 is at least greater than approximately 10:1.

In various embodiments, the length L of the impingement slot 308 is approximately 0.1 - 1.0 inches (2.54 - 25.4 mm) or 0.05 - 1.001 inches (1.27 - 25.43 mm).

In various embodiments, the width W of the impingement slot 308 is approximately 0.01 - 0.1 inches (0.254 - 2.54 mm) or 0.005 - 0.101 inches (0.127 - 2.57 mm).

In various embodiments, a height of the impingement slot 308 from the top (i.e., first) surface 334 of the shell 302 to the bottom (i.e., second) surface 336 of the shell 302 is approximately 0.02 - 0.08 inches (0.508 - 2.032 mm) or 0.019 - 0.2 (0.483 - 5.08 mm)-depending on the first angle θ1 and a thickness of the shell 302.

As can be seen particularly in FIGS. 3, 5, and 13, the dimensions of the impingement slot 308 along the top surface 314 of the shell 302 include a length L of the impingement slot 308 that is longer than a width W of the impingement slot 308, in various embodiments. The velocity of the airflow ejected through the impingement slot 308 with such dimensions is unstable, which minimizes stagnation zones within the impingement airflow and thus decreases particulate matter accumulation on the top (i.e., first) surface 334 of the panel 304. The unstable airflow also increases heat transfer capabilities throughout the combustion liner 300.

In various embodiments, the impingement slots 308 in the shell 302 are offset from the effusion cooling holes 328 in the panel 304 relative to one another across the flow channel 306 to create and/or increase cross-flow of the cooling fluid within the flow channel 306, including as described herein.

Referring again to FIGS. 3-4, the first angle θ1 of the shell 302 is approximately 90 degrees, plus or minus approximately 5 degrees, with respect to the bottom (i.e., second) surface 316 of shell 302, and the second angle θ2 of the panel 304 is approximately 45 degrees, plus or minus approximately 5 degrees, with respect to the bottom (i.e., second) surface 336 of panel 304, in various embodiments.

Referring now particularly to FIGS. 5-6, the first angle θ1 of the shell 302 is approximately 45 degrees, plus or minus approximately 5 degrees, with respect to the bottom (i.e., second) surface 316 of shell 302, and the second angle θ2 of the panel 304 is approximately 45 degrees, plus or minus approximately 5 degrees, with respect to the bottom (i.e., second) surface 336 of panel 304, in various embodiments. Accordingly, the first angle θ1 is approximately equal to the second angle θ2, in various embodiments.

When the first angle θ1 is less than approximately 90 degrees, plus or minus approximately 5 degrees, with respect to the bottom surface 316 of shell 302, the shear flow induced by angled impinging air decreases particulate matter accumulation within the flow channel 306 and/or the overall combustion liner 300.

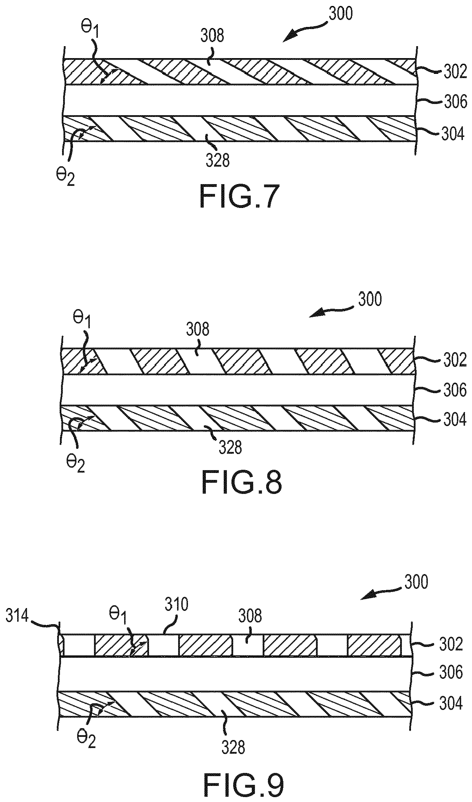

Referring now particularly to FIG. 7, the first angle θ1 of the shell 302 is less than the second angle θ2 of the panel 304, in various embodiments.

Referring now particularly to FIG. 8, the first angle θ1 of the shell 302 is greater than the second angle θ2 of the panel 304, in various embodiments.

Referring now particularly to FIGS. 3-8, the inlet 310 in the top (i.e., first) surface 314 of the shell 302 generally has a same dimensional area as the outlet 312 in the bottom (i.e., second) surface 316 of the shell 302, in various embodiments.

Referring now particularly to FIG. 9, at least one surface of the inlet 310 of the impingement slot 308 is beveled and/or chamfered towards the top (i.e., first) surface 314 of the shell 302.

Referring now particularly to FIG. 10, multiple surfaces of the inlet 310 of the impingement slot 308 are beveled and/or chamfered towards the top (i.e., first) surface 314 of the shell 302.

Referring now particularly to FIG. 11, the inlet 310 of the impingement slot 308 in the top (i.e., first) surface 314 of the shell 302 has a smaller dimensional area than the outlet 312 of the impingement slot 308 in the bottom (i.e., second) surface 316 of the shell 302, such that one or more sidewalls 318 of the impingement slot 308 diverge within the shell 302 towards the outlet 312 in the bottom (i.e., second) surface 316 of the shell 302. In such embodiments, the shear flow induced by angled impinging air and/or the divergent sidewalls 318 decrease particulate matter accumulation within the combustion liner 300. In various embodiments, the divergent sidewalls 318 decrease an aerodynamic lens effect of the impingement slot 308, further decreasing particulate matter accumulation.

In various embodiments, the first angle θ1 of the shell 302 is approximately 45-90 degrees, plus or minus approximately 25 degrees, with respect to the bottom (i.e., second) surface 316 of the shell 302.

Referring now particularly to FIG. 12, the second angle θ2 of the panel 304 is greater than approximately 90 degrees, plus or minus approximately 5 degrees, with respect to the bottom (i.e., second) surface 336 of panel 304. In various embodiments, the second angle θ2 of the panel 304 is approximately 45-135 degrees, plus or minus approximately 25 degrees, with respect to the bottom (i.e., second) surface 336 of the panel 304.

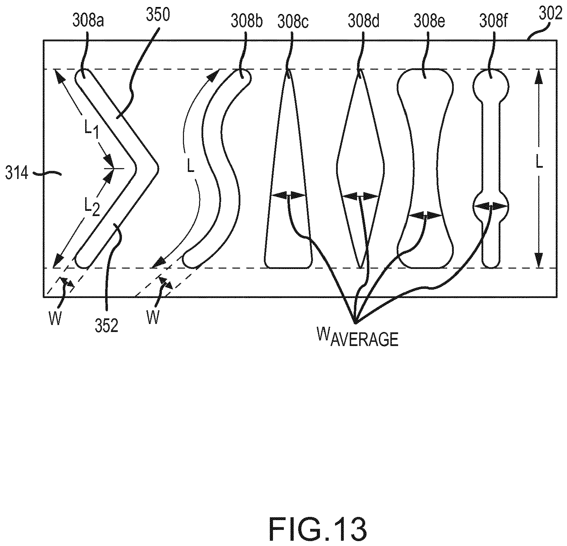

Referring now to particularly FIG. 13, various slot shapes 308a-308f are configured to minimize particulate matter accumulation within the combustion liner 300. In various embodiments, shapes of the various slot shapes 308a-308f are chosen to further promote impingement airflow instability in the flow channel 306, which minimizes stagnation zones, decreases particulate matter accumulation, and/or promotes improved heat transfer. In various embodiments, the various slot shapes 308a-308f are arranged on at least the top surface 314 of the shell 302-shown collectively in FIG. 13 for illustrative purposes only.

For example, in various embodiments, one various slot shape 308a is generally chevron-shaped, with a first segment 350 having a first length L1 and a second segment 352 having a second length L2 such that the sum of the first length L1 and the second length L2 of the various slot shape 308a comprises the length L of the impingement slot 308 as described herein. In various embodiments, two or more segments of the various slot shape 308a are arranged at various angles-such as, for example, the first segment 350, the second segment 352, and/or other segments too.

In various embodiments, one various slot shape 308b is generally curvilinear (e.g., curved and/or s-shaped), having an overall curved length L of the impingement slot 308 as described herein.

In various embodiments, a width W of various slot shapes 308c-308f on the top (i.e., first) surface 314 of the shell 302 varies along the top (i.e., first) surface 314 of the shell 302. For example, in various embodiments, widths W of various slot shapes 308c-308f on the top (i.e., first) surface 314 of the shell 302 are non-uniform along lengths L of the various slot shapes 308c-308f along the top (i.e., first) surface 314 of the shell 302.

In various embodiments, one various slot shape 308c is generally wedge-shaped, wherein an average width WAverage of the various slot shape 308c comprises the width W of the impingement slot 308 as described herein.

In various embodiments, one various slot shape 308d is generally diamond-shaped, wherein an average width WAverage of the various slot shape 308d comprises the width W of the impingement slot 308 as described herein.

In various embodiments, one various slot shape 308e is generally hourglass-shaped, wherein an average width WAverage of the various slot shape 308e comprises the width W of the impingement slot 308 as described herein.

In various embodiments, one various slot shape 308f is generally keyhole-shaped, wherein an average width WAverage of the various slot shape 308f comprises the width W of the impingement slot 308 as described herein.

In various embodiments, the impingement slots 308, such as shown in FIGS. 3-13, are configured to have one or more partially and/or fully rounded corners along the top surface 314 of the shell 302 so as to reduce stress concentrations.

Technical effects and benefits of this disclosure include providing improved slot arrangements in a shell 302 to improve cooling in an impingement floatwall film formed on a surface of a panel 304 proximate a combustion chamber 66 of a gas turbine engine 20, the slot arrangements configured to minimize particulate matter accumulation in accordance with length L and width W dimensions of the impingement slots 308 along top (i.e., first) surfaces 314 thereof. Improved impingements slots, such as with the impingement slots 308 of FIGS. 3-13, enable the panel 304 to be able to withstand higher temperatures and stresses more consistently and are less likely to create zones of stagnation in the impingement airflow and/or reduce particulate matter accumulation, thereby increasing durability and performance of an engine, such as the gas turbine engine 20 of FIG. 1.

Benefits, advantages, and solutions to problems have been described herein with regard to specific embodiments. Furthermore, connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of this disclosure.

The scope of this disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one, and that reference to an item in the singular may also include the item in the plural, and vice-versa. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B, and C may be present in a single embodiment; for example, A and B, A and C, B and C, or A and B and C. Different cross-hatching is used throughout the figures to denote different parts, but not necessarily to denote the same or different materials. Like numerals and depictions also generally represent like elements.

The steps recited in any of the method or process descriptions may be executed in any order and are not necessarily limited to the order presented. Furthermore, any reference to singular elements, embodiments, and/or steps includes plurals thereof, and any reference to more than one element, embodiment, and/or step may include a singular one thereof. Elements and steps in the figures are illustrated for simplicity and clarity and have not necessarily been rendered according to any particular sequence. For example, steps that may be performed concurrently or in different order are only illustrated in the figures to help to improve understanding of embodiments of the present, representative disclosure.

Any reference to attached, fixed, connected, or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas, but not necessarily to denote the same or different materials. In some cases, reference coordinates may or may not be specific to each figure.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include this particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments, whether or not explicitly described. After reading the description, it will be apparent to one skilled in the relevant art(s) how to implement this disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. § 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements, but it may also include other elements not expressly listed or inherent to such process, method, article, or apparatus.

## Claims

1. A combustion liner for an engine, comprising:
a shell having an impingement slot disposed therethrough; and
a panel spaced apart from the shell to define a flow channel therebetween, the panel having an effusion cooling hole disposed therethrough, the effusion cooling hole offset from the impingement slot and configured to create an impingement floatwall film formed between the panel and a combustion chamber of the engine;
wherein a length of the impingement slot on a first surface of the shell is longer than a width of the impingement slot on the first surface of the shell, the first surface being distal the flow channel, the length and width configured to create turbulent airflow within the flow channel.

2. The combustion liner of claim 1, wherein the length of the impingement slot is at least approximately five times longer than the width of the impingement slot.

3. The combustion liner of claim 1, wherein the length of the impingement slot is at least approximately ten times longer than the width of the impingement slot.

4. The combustion liner of claim 1, 2 or 3, wherein a sidewall of the impingement slot forms a first angle with a second surface of the shell, the second surface being proximate the flow channel and spaced apart from the first surface, and a sidewall of the effusion cooling hole forms a second angle with a surface of the panel proximate the combustion chamber that is approximately equal to the first angle.

5. The combustion liner of any of claims 1 to 3, wherein a sidewall of the impingement slot forms a first angle with a second surface of the shell, the second surface being proximate the flow channel and spaced apart from the first surface, and a sidewall of the effusion cooling hole forms a second angle with a surface of the panel proximate the combustion chamber that is greater than the first angle.

6. The combustion liner of any of claims 1 to 3, wherein a sidewall of the impingement slot forms a first angle with a second surface of the shell, the second surface being proximate the flow channel and spaced apart from the first surface, and a sidewall of the effusion cooling hole forms a second angle with a surface of the panel proximate the combustion chamber that is less than the first angle.

7. The combustion liner of any preceding claim, wherein at least a portion of a sidewall of the impingement slot is at least one of beveled or chamfered along the first surface of the shell.

8. The combustion liner of any preceding claim, wherein at least a portion of a sidewall of the impingement slot diverges from the first surface of the shell towards a second surface of the shell, the second surface being proximate the flow channel and spaced apart from the first surface.

9. The combustion liner of any preceding claim, wherein a shape of the impingement slot on the first surface includes at least one rounded corner.

10. The combustion liner of any preceding claim, wherein a shape of the impingement slot on the first surface is at least one of chevron-shaped or curvilinear.

11. The combustion liner of any preceding claim, wherein the width of the impingement slot on the first surface varies along the first surface.

12. A gas turbine engine, comprising:
a compressor section configured to compress air;
a combustor fluidly coupled to the compressor section and including a combustion liner forming a combustion chamber in which the compressed air is mixed with fuel and combusted to generate combustion gases; and
a turbine section fluidly coupled to the combustor to receive the combustion gases from the combustor and extract energy from the combustion gases;
wherein the combustion liner comprises a combustion liner as claimed in any preceding claim.
